(19) Europäisches Patentamt
European Patent Office
Office européen des brevets

(11) **EP 4 056 982 A1**

(12) **EUROPEAN PATENT APPLICATION**
published in accordance with Art. 153(4) EPC

(43) Date of publication:
**14.09.2022 Bulletin 2022/37**

(21) Application number: **19952113.9**

(22) Date of filing: **05.11.2019**

(51) International Patent Classification (IPC):
**G01N 1/00** (2006.01)   **G01N 1/22** (2006.01)

(52) Cooperative Patent Classification (CPC):
**G01N 1/00; G01N 1/22**

(86) International application number:
**PCT/JP2019/043212**

(87) International publication number:
**WO 2021/090351 (14.05.2021 Gazette 2021/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Hitachi High-Tech Corporation
Minato-ku
Tokyo 105-6409 (JP)**

(72) Inventors:
• **OSAKA Akimasa
Tokyo 105-6409 (JP)**
• **SHISHIKA Tsukasa
Tokyo 105-6409 (JP)**
• **YOSHIOKA Shinji
Tokyo 105-6409 (JP)**

(74) Representative: **MERH-IP Matias Erny Reichl
Hoffmann
Patentanwälte PartG mbB
Paul-Heyse-Strasse 29
80336 München (DE)**

(54) **SAMPLE-ANALYZING APPARATUS**

(57) Provided is a sample-analyzing apparatus that can reduce a difference in the flow rate of a vaporized sample generated by heating a piece of paper to which the sample has adhered. The sample-analyzing apparatus includes a sample introduction unit that generates and suctions a vaporized sample obtained by vaporizing a sample adhered to a piece of paper by heating the piece of paper, and an analysis unit that analyzes the suctioned vaporized sample. The sample introduction unit has a heating surface that comes into contact with the piece of paper and heats the piece of paper, a plurality of flow paths through which the vaporized sample flows are provided in the heating surface, and a suction opening through which the vaporized sample is suctioned is provided in each of the flow paths.

[FIG. 2]

EP 4 056 982 A1

## Description

Technical Field

The present invention relates to a sample-analyzing apparatus for analyzing a sample adhered to an object to be measured, and more particularly, to a sample introduction unit into which a piece of paper to which the sample adhered to the object to be measured is adhered is introduced.

Background Art

A sample-analyzing apparatus is an apparatus for analyzing a sample adhered to a surface of baggage or the like, and is used for security measures or the like in a place where an unspecified number of people gather, such as an airport or an event site. In the sample-analyzing apparatus, a sample adhered to a piece of paper that was used to wipe off the surface of the baggage or the like is vaporized by heating the piece of paper and a vaporized sample is obtained, and the sample is collected and analyzed by suction of the vaporized sample. Since the amount of the sample adhered to the piece of paper is fairly small, it is desirable to constantly suction the vaporized sample and collect the sample without leakage.

PTL 1 discloses that, in order to improve an efficiency of collecting a sample, a plurality of protrusions provided on an inner wall of a vaporizing chamber for vaporizing a sample adhered to a piece of paper separate the piece of paper from a suction opening for suctioning a vaporized sample, thereby preventing the suction opening from being blocked by the piece of paper. Since a flow path of the vaporized sample communicating with the suction opening is ensured by recesses between the protrusions while the suction opening is prevented from being blocked, the efficiency of collecting the sample can be improved.

Citation list

Patent Literature

PTL 1: JP-A-2009-115651

Summary of Invention

Technical Problem

However, in PTL 1, although a plurality of flow paths communicating with a single suction opening are ensured, a flow rate of the vaporized sample is uneven for each flow path due to a difference in a distance to the suction opening or a difference in cross-sectional areas among the flow paths. That is, the flow rate of the vaporized sample flowing through the flow path having a long distance to the suction opening or the flow path having a small cross-sectional area is small, and thus may not be easily suctioned and analyzed.

Accordingly, an object of the invention is to provide a sample-analyzing apparatus capable of reducing a difference in a flow rate of a vaporized sample that occurs due to heating of a piece of paper to which the sample is adhered.

Solution to Problem

The invention achieves the above object by providing a suction opening through which a vaporized sample is suctioned in each of a plurality of flow paths through which the vaporized sample flows, and the vaporized sample is generated by heating a piece of paper to which the sample is adhered.

More specifically, the invention provides a sample-analyzing apparatus including a sample introduction unit that generates and suctions a vaporized sample obtained by vaporizing a sample adhered to a piece of paper by heating the piece of paper, and an analysis unit that analyzes the suctioned vaporized sample. The sample introduction unit has a heating surface that comes into contact with the piece of paper and heats the piece of paper, a plurality of flow paths through which the vaporized sample flows are provided in the heating surface, and a suction opening through which the vaporized sample is suctioned is provided in each of the flow paths.

Advantageous Effect

According to the invention, it is possible to provide a sample-analyzing apparatus capable of reducing a difference in a flow rate of a vaporized sample that occurs due to heating of a piece of paper to which the sample is adhered.

Brief Description of Drawings

[FIG. 1] FIG. 1 is a diagram illustrating a configuration example of a sample-analyzing apparatus according to a first embodiment.
[FIG. 2] FIGS. 2(a) and 2(b) are views illustrating a heating surface of a sample introduction unit according to the first embodiment.
[FIG. 3] FIGS. 3(a), (b), and (c) are views illustrating a heating surface of a sample introduction unit according to a second embodiment.
[FIG. 4] FIGS. 4(a) and (b) are views illustrating a heating surface of a sample introduction unit according to a third embodiment.
[FIG. 5] FIGS. 5(a) and (b) are views illustrating a heating surface of a sample introduction unit according to a fourth embodiment.

Description of Embodiments

Hereinafter, preferred embodiments of a sample-analyzing apparatus according to the invention will be described with reference to the accompanying drawings. The sample-analyzing apparatus is an apparatus for analyzing a sample adhered to a surface of baggage or the like, by which a vaporized sample is generated by heating a piece of paper that was used to wipe off a surface of baggage or the like and is suctioned for analysis.

First Embodiment

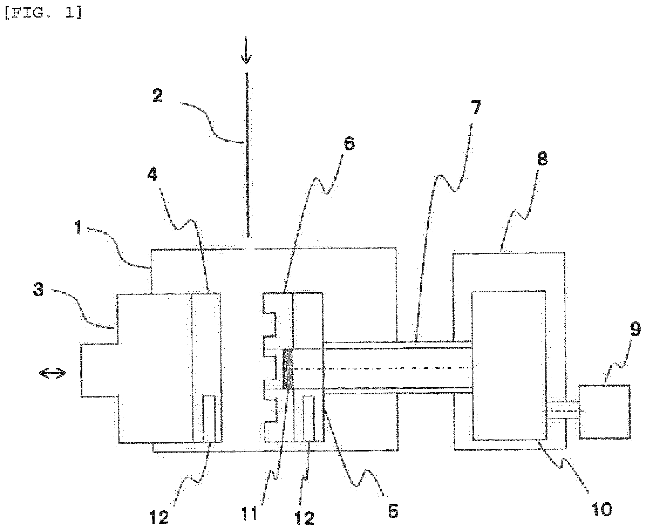

An example of an overall configuration of a sample-analyzing apparatus according to the present embodiment will be described with reference to FIG. 1. The sample-analyzing apparatus includes a sample introduction unit 1 into which a piece of paper 2 that was used to wipe off a surface of baggage or the like is inserted, and an analysis unit 8 that analyzes a sample adhered to the piece of paper 2.

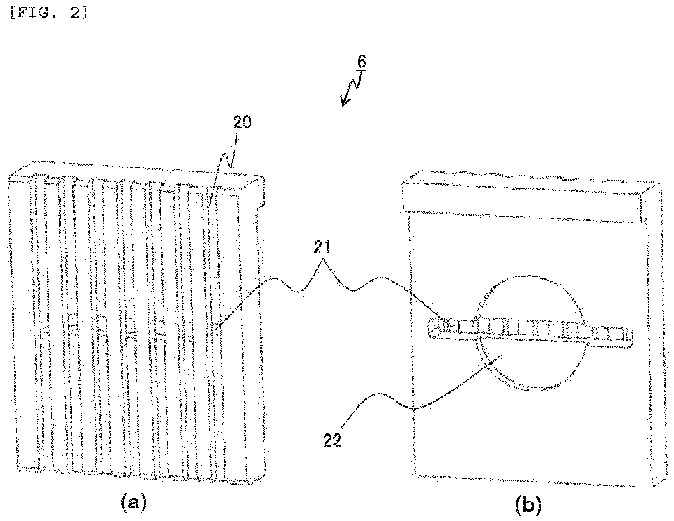

The sample introduction unit 1 is a part that generates a vaporized sample by heating the inserted piece of paper 2 and suctions the generated vaporized sample, and includes a first heating unit 4, a second heating unit 5, a heating surface 6, and a drive unit 3. The first heating unit 4 and the second heating unit 5 are metal blocks that are heated to a temperature, for example, 250 C, at which the sample adhered to the piece of paper 2 vaporizes, by heaters 12 provided inside the first heating unit 4 and the second heating unit 5. The first heating unit 4 and the second heating unit 5 face each other. The second heating unit 5 has an opening connected to a pipe 7 at the center. The heating surface 6 is attached to a surface of the second heating unit 5 where the second heating unit 5 faces the first heating unit 4, and the heating surface 6 is heated by heat conduction. On the heating surface 6 side of the aperture of the second heating unit 5, a dust filter 11 that prevents suction of foreign matter is provided. The heating surface 6 is a metal block, which will be described later with reference to FIG. 2, and is detachable from the second heating unit 5. The first heating unit 4 is moved in a direction of a double-headed arrow in FIG. 1 by the drive unit 3, and sandwiches or releases the piece of paper 2 between the first heating unit 4 and the heating surface 6. The vaporized sample generated by heating the piece of paper 2 sandwiched between the first heating unit 4 and the heating surface 6 is suctioned through the pipe 7.

The analysis unit 8 is a part that analyzes the vaporized sample suctioned through the pipe 7, and includes a low pressure unit 10. The low pressure unit 10 is maintained at a pressure lower than atmospheric pressure by an exhaust pump 9, and is connected to the pipe 7. The pressure inside the sample introduction unit 1 is the atmospheric pressure while the pressure inside the low pressure unit 10 is lower than the atmospheric pressure, and thus the vaporized sample reaches the low pressure unit 10 via the pipe 7 by a differential pressure between the sample introduction unit 1 and the low pressure unit 10. The vaporized sample that reached the low pressure unit 10 is ionized by an atmosphere pressure chemical ionization (APCI) method, an electron ionization (EI) method, or the like, and is then separated at each mass/charge ratio, that is, m/z, and detected individually by a mass spectrometry method or the like. Whether the sample adhered to the piece of paper 2 is a hazardous substance is analyzed based on results of separation and detection at each m/z. A detection result and an analysis result may be displayed on a display device not illustrated or may be output from an audio device.

The heating surface 6 of the present embodiment will be described with reference to FIG. 2. FIG. 2(a) is a perspective view illustrating the heating surface 6 on a side where the heating surface 6 comes into contact with the piece of paper 2, and FIG. 2(b) is a perspective view illustrating the heating surface 6 on a side where the heating surface 6 is attached to the second heating unit 5. In the following description, the side where the heating surface 6 comes into contact with the piece of paper 2 is referred to as a front side, and the side where the heating surface 6 is attached to the second heating unit 5 is referred to as a back side.

A plurality of flow paths 20 are provided on the front side of the heating surface 6. The flow paths 20 are grooves provided parallel to the heating surface 6 on the front side of the heating surface 6. FIG. 2(a) illustrates the heating surface 6 provided with seven flow paths 20. It is preferable that cross-sections of the flow paths 20 have the same area and, more preferably have the same shape. For example, it is preferable that each of the plurality of flow paths 20 has a rectangular cross-section having the same width and the same depth.

A suction opening 21 is provided in each of the flow paths 20. The suction opening 21 is a hole penetrating the heating surface 6 from the front side to the back side, and is provided, for example, at the center of the flow path 20 in the longitudinal direction. The suction opening 21 is connected to the dust filter 11 and the pipe 7 on the back side of the heating surface 6.

A connection unit 22 connected to the dust filter 11 and the pipe 7 is provided on the back side of the heating surface 6. The connection unit 22 is a recess provided by drilling the back side of the heating surface 6 and is communicated with the suction opening 21. FIG. 2(b) illustrates the connection unit 22 having a shape obtained by combining a circle and a rectangle. The dust filter 11 and the pipe 7 are connected to the connection unit 22 so as to be hermetically sealed.

A flow of the vaporized sample on the heating surface 6 will be described. Since the flow path 20 is open on the front side of the heating surface 6, the vaporized sample generated by heating the piece of paper 2 flows into the flow path 20. Since the suction opening 21 provided to each of the flow paths 20 is connected to the pipe 7 communicating with the low pressure unit 10 while maintaining a sealing state and the pressure in the low pressure unit 10 is lower than the atmospheric pressure, the vaporized sample flowing into the flow path 20 is suctioned from the suction opening 21. At this time, since the piece of paper 2 and the suction opening 21 are separated by the depth of the flow path 20, blocking of the suction opening 21 by the piece of paper 2 can be prevented.

The flow rate of the vaporized sample flowing through the flow path 20 varies depending on a distance to the suction opening 21, a cross-sectional area and an inner wall area of the flow path 20, and the like, and for example, a flow rate Q of a fluid in a circular tube is obtained by the following Equation (1).

$$Q = \Pi a^4 p / (8 \mu L) \qquad (1)$$

Here, a is a radius of the circular tube, p is a differential pressure between both ends of the circular tube, $\mu$ is a viscosity of the fluid, and L is a length of the circular tube.

When the suction opening 21 is provided to each of the flow paths 20, a difference in the distance to the suction opening 21 among the flow paths 20 is smaller than in the case of a single suction opening, and thus the difference in the flow rate of the vaporized sample can be reduced. Further, by making the cross-sections of the flow paths 20 have the same area and the same shape, it is possible to further reduce the difference in the flow rate of the vaporized sample in each flow path 20, and it is possible to prevent a situation in which a part of the vaporized sample is not suctioned and is not analyzed. It is desirable that the flow rates of the vaporized sample are the same among the flow paths 20, but if the sample adhered to the piece of paper 2 can be collected without leakage, a difference may occur in the flow rates of the flow paths 20. That is, the difference in the cross-sectional areas among the flow paths 20 may be within a predetermined range, and for example, may be within a range in which the sample adhered to the piece of paper 2 can be collected without leakage.

The flow path 20 is preferably provided parallel in the direction in which the piece of paper 2 is inserted. By providing the flow path 20 in parallel in the direction in which the piece of paper 2 is inserted, it is possible to reduce friction when the piece of paper 2 is inserted into or removed from the sample introduction unit 1. The excessively large friction causes wrinkles in the piece of paper 2, and makes it difficult to collect the sample adhered to a wrinkled portion. That is, an efficiency of collecting the sample can be improved by reducing the friction during insertion and removal of the piece of paper 2.

Second Embodiment

In the first embodiment, a case where each of the plurality of flow paths 20 has a rectangular cross-section having the same width and the same depth is described. In the present embodiment, a case where the width and the depth of the flow path 20 are non-uniform will be described. A difference between the present embodiment and the first embodiment is a cross-sectional shape of the flow path 20 provided in the heating surface 6, and thus descriptions of the other configurations are omitted.

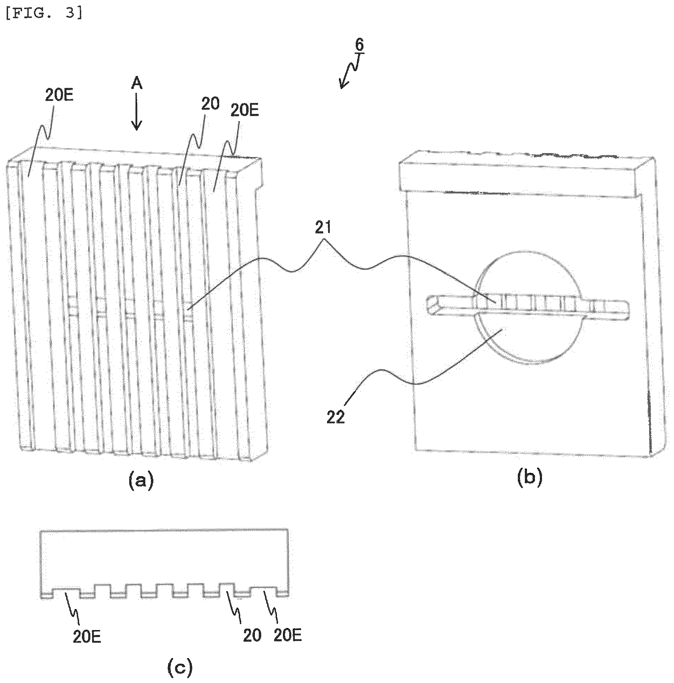

The heating surface 6 of the present embodiment will be described with reference to FIG. 3. FIG. 3(a) is a perspective view illustrating the front side of the heating surface 6, FIG. 3(b) is a perspective view illustrating the back side of the heating surface 6, and FIG. 3(c) is a view taken in a direction of an arrow A in FIG. 3(a). The plurality of flow paths 20 are provided on the front side of the heating surface 6 as in the first embodiment. However, a part of the flow paths 20 of the present embodiment has a rectangular cross-section having a width and a depth different from those of the other flow paths 20. Specifically, as illustrated in FIG. 3(c), two flow paths 20E at both ends have a larger width and a smaller depth than the other five flow paths 20. However, cross-sectional areas of the flow paths 20 are made equal to each other, or a difference in the cross-sectional areas is set within a predetermined range.

With such a configuration, it is possible to reduce the difference in the flow rate of the vaporized sample in each flow path 20, and it is possible to prevent a situation in which a part of the vaporized sample is not suctioned and is not analyzed. Since the piece of paper 2 and the suction opening 21 are separated by the depth of the flow path 20, the suction opening 21 can be prevented from being blocked by the piece of paper 2. Further, since the flow path 20 is provided parallel in a direction in which the piece of paper 2 is inserted, friction during insertion and removal of the piece of paper 2 is reduced, and an efficiency of collecting the sample can be improved.

Third Embodiment

In the first embodiment, a case where a single suction opening 21 is provided in each of the plurality of flow paths 20 is described. In the present embodiment, a case where a plurality of suction openings 21 are provided in each of the plurality of flow paths 20 will be described. Differences between the present embodiment and the first embodiment are the number of the suction openings 21 provided in each flow path 20 and a shape of the connection unit 22 communicating with the suction openings 21, and thus descriptions of the other configurations are omitted.

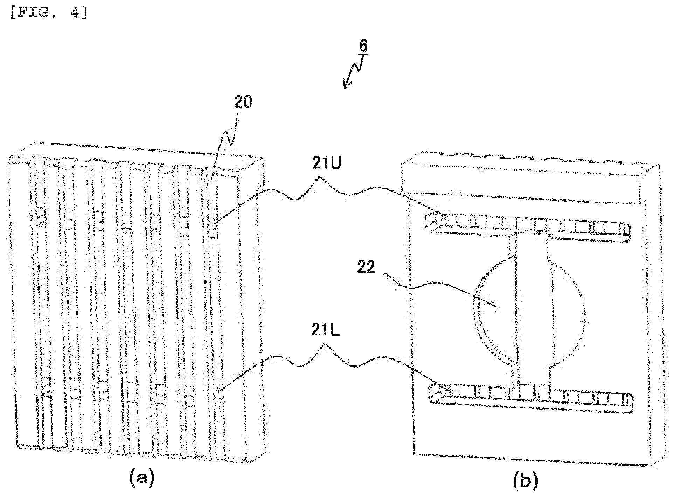

The heating surface 6 of the present embodiment will be described with reference to FIG. 4. FIG. 4(a) is a perspective view illustrating the front side of the heating surface 6, and FIG. 4(b) is a perspective view illustrating the back side of the heating surface 6. The plurality of flow paths 20 are provided on the front side of the heating surface 6 as in the first embodiment. However, each of the flow paths 20 of the present embodiment is provided with the plurality of suction openings 21. Specifically, as illustrated in FIG. 4, a suction opening 21U is provided at the center of the upper half of each flow path 20, and a suction opening 21L is provided at the center of the lower half of each flow path 20. Since positions of the suction opening 21U and the suction opening 21L of the present embodiment are different from those of the first embodiment, the connection unit 22 communicating with the suction opening 21U and the suction opening 21L also has a different shape. Specifically, as illustrated in FIG. 4(b), the connection unit 22 of the present embodiment has a shape obtained by combining a horizontally oriented H and a circle.

With such a configuration, distances to the suction opening 21U and the suction opening 21L are shorter than those in the first embodiment, so that the flow rate of the vaporized sample in the flow path 20 is increased, and an efficiency of collecting the sample adhered to the piece of paper 2 can be improved. By providing the suction opening 21U and the suction opening 21L for each flow path 20, the vaporized sample is suctioned by the suction opening 21L even when a part of the piece of paper 2 separated by heating blocks the suction opening 21U, and therefore a detection sensitivity can be prevented from decreasing. Also in the present embodiment, since the flow path 20 is provided parallel in a direction in which the piece of paper 2 is inserted, friction during insertion and removal of the piece of paper 2 is reduced, and the efficiency of collecting the sample can be improved.

Fourth Embodiment

In the first embodiment, a case where the flow path 20 is provided parallel in a direction in which the piece of paper 2 is inserted is described. In the present embodiment, a case where the flow paths 20 are provided in directions intersecting with each other will be described. Differences between the present embodiment and the first embodiment are the direction of the flow path 20, the number of the suction openings 21 provided in each flow path 20, and a shape of the connection unit 22 communicating with the suction openings 21, and thus descriptions of the other configurations are omitted.

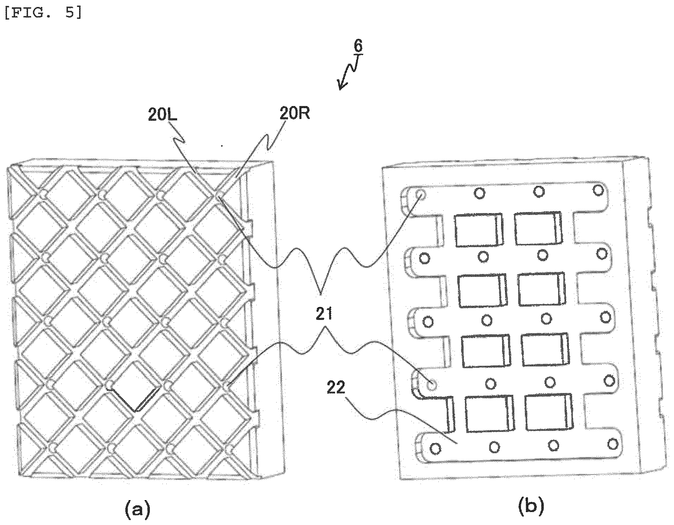

The heating surface 6 of the present embodiment will be described with reference to FIG. 5. FIG. 5(a) is a perspective view illustrating the front side of the heating surface 6, and FIG. 5(b) is a perspective view illustrating the back side of the heating surface 6. The plurality of flow paths 20 are provided on the front side of the heating surface 6 as in the first embodiment. However, the flow paths 20 of the present embodiment are provided in directions intersecting with each other. Specifically, as illustrated in FIG. 5(a), a flow path 20R is provided in a direction from upper right to lower left, and a flow path 20L is provided in a direction from upper left to lower right. The suction opening 21 may be provided in at least one of the flow path 20R and the flow path 20L, and for example, as illustrated in FIG. 5(a), the suction opening 21 is provided at an intersection where the flow path 20R and the flow path 20L intersect with each other. Since a position of the suction opening 21 of the present embodiment is different from that of the first embodiment, the connection unit 22 communicating with the suction opening 21 also has a different shape. Specifically, as illustrated in FIG. 5(b), the connection unit 22 of the present embodiment has a shape obtained by combining a plurality of horizontally oriented Hs.

With this configuration, since a distance to the suction opening 21 is shorter than that in the first embodiment, the flow rate of the vaporized sample in the flow path 20 is increased, and an efficiency of collecting the sample adhered to the piece of paper 2 can be improved. By providing a plurality of suction openings 21 in the flow path 20R or the flow path 20L, even when a part of the piece of paper 2 blocks any one of the suction openings 21, the vaporized sample is suctioned by the other suction openings 21, and therefore a detection sensitivity can be prevented from decreasing. Since the flow path 20R and the flow path 20L are communicated with the specific suction opening 21, the vaporized sample can be suctioned through the flow path 20L even when, for example, the flow path 20R is clogged by a part of the piece of paper 2.

As described above, a plurality of embodiments according to the invention are described. The invention is not limited to the above embodiments, and elements may be modified without departing from the scope of the invention. For example, in the third embodiment, the number of suction openings 21 provided for each flow path 20 may be three or more. Further, a plurality of elements disclosed in the above embodiments may be appropriately combined. Further, certain elements may be deleted from all the elements illustrated in the above embodiments.

Reference Sign List

    1 sample introduction unit
    2 piece of paper
    3 drive unit
    4 first heating unit
    5 second heating unit
    6 heating surface
    7 pipe
    8 analysis unit
    9 exhaust pump
    10 low pressure unit

11 dust filter
12 heater
20 flow path
21 suction opening
22 connection unit

**Claims**

1. A sample-analyzing apparatus comprising:

   a sample introduction unit configured to generate and suction a vaporized sample obtained by vaporizing a sample adhered to a piece of paper by heating the piece of paper; and
   an analysis unit configured to analyze the suctioned vaporized sample, wherein
   the sample introduction unit has a heating surface that comes into contact with the piece of paper and heats the piece of paper, a plurality of flow paths through which the vaporized sample flows are provided in the heating surface, and a suction opening through which the vaporized sample is suctioned is provided in each of the flow paths.

2. The sample-analyzing apparatus according to claim 1, wherein
   the plurality of flow paths are provided in parallel in a direction in which the piece of paper is inserted into the sample introduction unit.

3. The sample-analyzing apparatus according to claim 1, wherein
   a difference in cross-sectional areas among the plurality of flow paths is within a predetermined range.

4. The sample-analyzing apparatus according to claim 3, wherein
   the plurality of flow paths have the same cross-sectional area.

5. The sample-analyzing apparatus according to claim 4, wherein
   the plurality of flow paths have the same cross-sectional shape.

6. The sample-analyzing apparatus according to claim 1, wherein
   each of the plurality of flow paths is provided with a plurality of suction openings.

7. The sample analysis apparatus according to claim 1, wherein
   the plurality of flow paths are provided in directions intersecting with each other.

8. The sample-analyzing apparatus according to claim 7, wherein
   a suction opening is provided at an intersection where the plurality of flow paths intersect with each other.

[FIG. 1]

[FIG. 2]

(a)                    (b)

[FIG. 3]

6

20E A 20 20E

21

22

(a)

(b)

20E 20 20E

(c)

[FIG. 4]

(a)　　　　　　　　　　　　　(b)

[FIG. 5]

(a)　　　　　　　　　　　　　(b)

## INTERNATIONAL SEARCH REPORT

International application No.

PCT/JP2019/043212

A. CLASSIFICATION OF SUBJECT MATTER
Int.Cl. G01N1/00(2006.01)i, G01N1/22(2006.01)i

According to International Patent Classification (IPC) or to both national classification and IPC

B. FIELDS SEARCHED

Minimum documentation searched (classification system followed by classification symbols)
Int.Cl. G01N1/00, G01N1/22

Documentation searched other than minimum documentation to the extent that such documents are included in the fields searched
Published examined utility model applications of Japan       1922-1996
Published unexamined utility model applications of Japan     1971-2019
Registered utility model specifications of Japan             1996-2019
Published registered utility model applications of Japan     1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2009-115651 A (MITSUBISHI HEAVY INDUSTRIES, LTD.) 28 May 2009, paragraphs [0022]-[0059], fig. 1-8 (Family: none) | 1-8 |
| Y | JP 09-213722 A (HITACHI, LTD.) 15 August 1997, paragraphs [0017]-[0045], fig. 1-6 (Family: none) | 1-8 |

☒ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18.12.2019 | 07.01.2020 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

12

**INTERNATIONAL SEARCH REPORT**

| International application No. |
| --- |
| PCT/JP2019/043212 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2007-139551 A (HITACHI, LTD.) 07 June 2007, entire text, all drawings (Family: none) | 1-8 |
| A | JP 2009-220121 A (NGK INSULATORS LTD.) 01 October 2009, entire text, all drawings & US 2009/0230176 A1, entire text, all drawings & EP 2103374 A1 & CN 101530954 A | 1-8 |

Form PCT/ISA/210 (continuation of second sheet) (January 2015)

**EP 4 056 982 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009115651 A